# EUROPEAN PATENT APPLICATION

(11) **EP 1 414 206 A1**
(43) Date of publication of application: **28.04.2004**
(21) Application number: 01954387.5
(22) Date of filing: 31.07.2001
(51) Int. Cl.: H04L 25/02, G06F 3/00

(54) **SEMICONDUCTOR DEVICE AND DATA TRANSFER SYSTEM**

(71) Applicant: Fujitsu Limited, Kawasaki-shi, Kanagawa 211-8588 (JP)
(72) Inventor: TAKASE, Hiroshi, c/o Fujitsu Vlsi Limited, Kasugai-shi, Aichi 487-0013 (JP)
(74) Representative: Sunderland, James Harry
(86) International application number: PCT/JP2001/006587
(87) International publication number: WO 2003/013085

(57) **Abstract**

A semiconductor device for receiving a plurality of input signals having different center amplitude levels without using an AC coupling circuit. The semiconductor device (11) incorporates an input circuit (15), which includes receiving circuits (17, 18) and a detection circuit (19), and receives a plurality of input signals (IN) having different center amplitude levels in accordance with a connected external device (13). The receiving circuits (17, 18) have different signal determination levels. The detection circuit (19) detects the center amplitude level of the input signal (IN) and generates a control signal (SEL1, SEL2). One of the receiving circuits is selectively validated by the control signal (SEL1, SEL2) of the detection circuit (19), and the input signal (IN) is converted to an output signal (OUT) having a certain level.

## Description

### TECHNICAL FIELD

The present invention relates to a semiconductor device and a data transfer system for receiving data signals from an external device.

In recent years, audio/image related data transfer has been performed in computers, peripheral devices, and home audio/image equipment. To perform data transfer, the same protocol is used as for communication data, and a semiconductor for controlling the protocol (e.g., serial bus control) is incorporated in a computer, peripheral device, or audio/image equipment. Different external devices may be connected to the semiconductor device. The external devices may transmit signals having different center amplitude levels. Thus, the semiconductor device is required to be capable of retrieving signals having different center amplitude levels.

### BACKGROUND ART

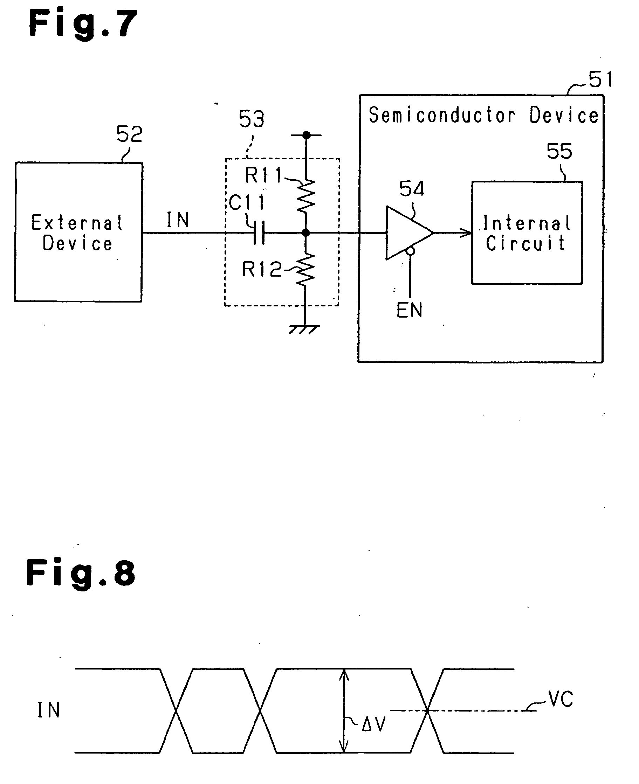

Fig. 7 is a schematic block diagram of a data transfer system that includes a semiconductor device 51 and an external device 52. The semiconductor device 51 is a serial bus controller that is in compliance with the P1394b standard. The semiconductor device 51 is connected to the external device 52 via an AC coupling circuit 53. If the serial bus controller is in compliance with the P1394b standard, the amplitude ΔV of an input signal IN is 600 mV to 800 mV as shown in Fig. 8. Further, the input signal IN has a center amplitude level VC that differs in accordance with the power supply voltage of the external device 52. For example, the center amplitude level VC is 1.4 V to 1.7 V when the power supply voltage is 2.5 V, and the center amplitude level VC is 0.7 to 1.0 V when the power supply voltage is 1.8 V. The center amplitude level VC refers to the amplitude range of the center level of the input signal IN.

In other words, the center amplification level VC of the input signal IN differs in accordance with the external device 52 connected to the semiconductor device 51. Thus, an AC coupling circuit 53 is connected between the semiconductor device 51 and the external device 52. The AC coupling circuit 53 converts the center amplitude level VC of the input signal IN from the external device 52 to a certain level to determine the input signal IN at an input circuit 54 of the semiconductor device 51. The AC coupling circuit 53, which includes a capacitor C11 and resistors R11 and R12, level-converts the input signal IN to a signal that oscillates about a predetermined voltage, which is obtained by dividing the power supply voltage with resistors R11 and R12. The input circuit 54 inputs a control signal (enable signal) EN and selectively provides an internal circuit 55 with the level-converted input signal in response to the control signal EN.

In a computer or a peripheral device, the AC coupling circuit 53 and the semiconductor device 51 is mounted on a circuit substrate. The semiconductor device 51 includes a plurality of input circuits 54. The plurality of input circuits 54 are connected to a plurality of external devices 52. In such a case, an AC coupling circuit 53 is required for each input circuit 54. This increases the number of components and enlarges the connection area of the circuit substrate.

It is an object of the present invention to provide a semiconductor device and a data transfer system that receive a plurality of data signals having different center amplitude levels without using an AC coupling circuit.

### DISCLOSURE OF THE INVENTION

A first aspect of the present invention provides a semiconductor device. The semiconductor device receives input signals having different center amplitude levels and includes a detection circuit for detecting a center amplitude level of the input signals to generate a control signal, and a conversion circuit connected to the detection circuit to convert the input signals to a signal having a certain level in accordance with the control signal.

A second aspect of the present invention provides a semiconductor device. The semiconductor device receives an input signal having different center amplitude levels and includes a detection circuit for detecting a center amplitude level of the input signal to generate a control signal, and a selection circuit connected to the detection circuit for selecting a determination level of the input signal in accordance with the control signal.

A third aspect of the present invention provides a data transfer system. The data transfer system includes a first device for outputting a data signal and a second device for receiving the data signal as an input signal. The second device includes a detection circuit for detecting a center amplitude level of the input signal and generating a control signal and a conversion circuit connected to the detection circuit for converting the input signal to a signal having a certain level in accordance with the control signal.

A fourth aspect of the present invention provides a data transfer system. The data transfer system includes a first device for outputting a data signal and a second device for receiving the data signal as an input signal. The second device includes a detection circuit for detecting a center amplitude level of the input signal and generating a control signal and a selection circuit connected to the detection circuit for selecting a determination level of the input signal in accordance with the control signal.

### BRIEF DESCRIPTION OF THE DRAWINGS

Fig. 1 is a schematic block diagram of a data transfer system according to a first embodiment of the present invention.
Fig. 2 is a schematic block diagram of the data transfer system in which a semiconductor device of Fig. 1 is connected to a further external device.
Fig. 3 is a circuit diagram of a detection circuit in the semiconductor device of Fig. 1.
Fig. 4 is a schematic block diagram of a data transfer system according to a second embodiment of the present invention.
Fig. 5 is a circuit diagram of a receiving circuit in the semiconductor device of Fig. 4.
Fig. 6 is a circuit diagram of a detection circuit in the semiconductor device of Fig. 4.
Fig. 7 is a schematic block diagram of a data transfer system in the prior art.
Fig. 8 is a waveform diagram of an input signal.

### BEST MODE FOR CARRYING OUT THE INVENTION

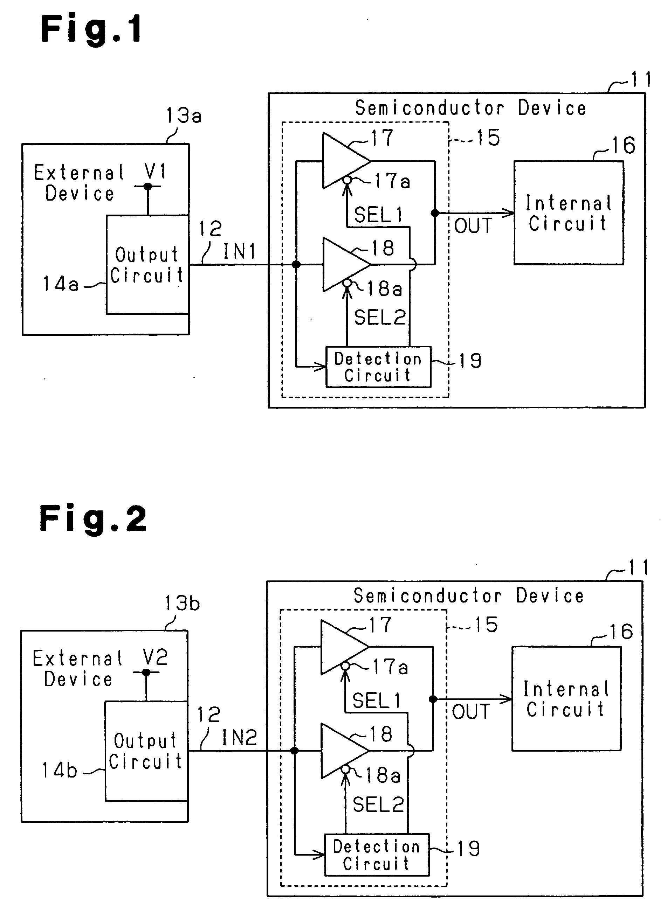

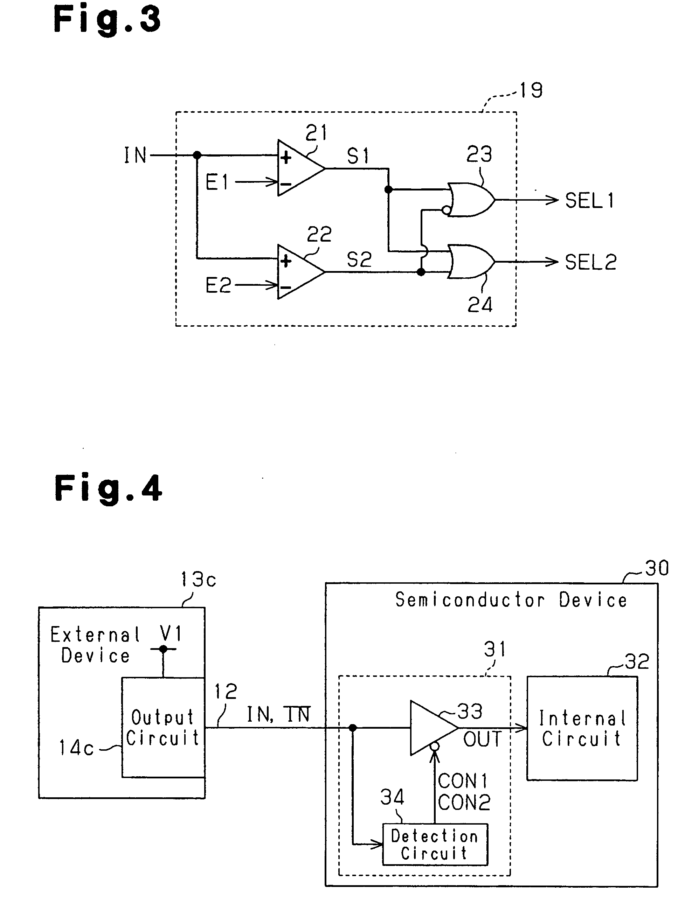

A data transfer system, which includes an external device (first device) and a semiconductor device (second device), according to a first embodiment of the present invention will now be discussed with reference to Figs. 1 and 3.

Fig. 1 is a schematic block diagram of a data transfer system. The semiconductor device 11, which is a serial bus controller that is in compliance with the P1394b standard, is mounted on a circuit substrate in a personal computer or a peripheral device. The semiconductor device 11 is connected to an external device 13a by a communication cable 12 to transfer data to and from the external device 13a.

The external device 13a includes an output circuit 14a. The output circuit 14a is supplied with a first power supply voltage V1 (2.5 V), and the output circuit 14a transmits an input signal (data signal) IN1 to the semiconductor device 11 in accordance with the first power supply voltage V1. The output circuit 14a of the external device 13a, which is in compliance with the P1394b standard in the same manner as the semiconductor device 22, transmits a signal IN1 having an amplitude ΔV of 600 to 800 mV in the same manner as the input signal IN shown in Fig. 8. The signal IN1 has a center amplitude level VC of 1.4 V to 1.7 V.

As shown in Fig. 2, in addition to the external device 13a, the semiconductor device 11 is connected to a further external device 13b that is in compliance with the external device 13b to transfer data to and from the external device 13b. The external device 13b includes an output circuit 14b. The output circuit 14b is supplied with a second power supply voltage V2 (1.8 V), and the output circuit 14a transmits an input signal IN2 to the semiconductor device 11 in accordance with the second power supply voltage V2. The input signal IN2 has an amplitude ΔV of 600 to 800 mV. The signal IN1 has a center amplitude level VC of 0.7 V to 1.0 V.

The semiconductor device 11, which is connected to the external device 13a or the external device 13b, receives the input signals IN1 and IN2 having a center amplitude level VC of 1.4 V to 1.7 V or 0.7 V to 1.0 V.

The configuration of the semiconductor device 11 will now be described in detail.

The semiconductor device 11 includes an input circuit 15 and an internal circuit 16, and the input circuit 15 includes first and second receiving circuits 17 and 18 and a detection circuit 19. The input circuit 15 is connected to the external device 13a or the external device 13b by the communication cable 12. The first and second receiving circuits 17 and 18 and the detection circuit 19 receive the input signal IN1 or the input signal IN2 from the external device 13a or the external device 13b.

The first receiving circuit (conversion circuit) 17 receives the input signal IN1, level-converts the input signal IN1 to the certain signal level required by the internal circuit 16, and outputs the converted signal to the internal circuit 16. The second receiving circuit (conversion circuit) 18 receives the input signal IN2, level-converts the input signal IN2 to the certain signal level required by the internal circuit 16, and outputs the converted signal to the internal circuit 16.

The first receiving circuit 17 receives the input signal IN1, the center amplitude level VC of which is at the first level (1.4 V to 1.7 V), and sends an output signal OUT, which has a high level or a low level in accordance with the level of the input signal IN1, to the internal circuit 16. The second receiving circuit 18 receives the input signal IN2, the center amplitude level VC of which is at the second level (0.7 V to 1.0 V), and sends the output signal OUT, which has a high level or a low level in accordance with the level of the input signal IN2, to the internal circuit 16.

The receiving circuit 17 is a three state circuit having an enable terminal 17a. The terminal 17a receives a selection signal SEL1 from the detection circuit 19. The receiving circuit 18 is a three state circuit having an enable terminal 18a. The terminal 18a receives a selection signal SEL2 from the detection circuit 19. The receiving circuit 17 is activated when the selection signal SEL1 has a low level and outputs the output signal OUT from the external device 13a in correspondence with the input signal IN1 from the external device 13a. The receiving circuit 18 is activated when the selection signal SEL2 has a low level and outputs the output signal OUT from the external device 13b in correspondence with the input signal IN2 from the external device 13b.

The detection circuit 19 generates the first and second selection signals SEL1 and SEL2, which validates one of the first and second receiving circuits 17 and 18, in response to the center amplitude level VC of the input signals IN1 and IN2. For example, the detection circuit 19 responds to the input signal IN1, the center amplitude level VC of which is at the first level (1.4 V to 1.7 V), and generates the first selection signal SEL1 at the low level and the second selection signal SEL2 at the high level. Further, the detection circuit 19 responds to the input signal IN2, the center amplitude level VC of which is at the second level (0.7 V to 1.0 V), and generates the first selection signal SEL1 at the high level and the second selection signal SEL2 at the low level.

Fig. 3 is a circuit diagram of the detection circuit 19. The detection circuit 19 is configured by comparators 21 and 22 and OR circuits 23 and 24. The input signal IN (IN1 and IN2) is input to the non-inverting input terminal of the first comparator 21, and a first reference voltage E1 is input to the inverting input terminal of the comparator 21. The first reference voltage E1 is set in correspondence with the first level, which is 1.7 V in the present embodiment. A reference voltage E2 is input to the inverting input terminal of the comparator 22. The second reference voltage E2 is set at a level corresponding to the second level, which is 1.0 V in the present embodiment.

Accordingly, when the input signal IN1 having the first level is input to the semiconductor device 11, the first comparator 21 outputs a comparison signal S1 at a low level and the second comparator 22 outputs a comparison signal S2 at a high level. Further, when the input signal IN2 having the second level is input, the first and second comparators 21 and 22 output the comparison signals S1 and S2 at a low level.

The first OR circuit 23 receives the comparison signal S1 of the first comparator 21, inverts the comparison signal S2 of the second comparator 22, and receives the inverted comparison signal to output the first selection signal SEL1 in accordance with the levels of the comparison signals. The second OR circuit 24 receives the comparison signal S1 of the first comparator 21 and the comparison signal S2 of the second comparator 22 to output the second selection signal SEL2 in accordance with the levels of the comparison signals.

More specifically, as shown in Fig. 1, the external device 13a is connected to the semiconductor device 11. When the input signal IN1 of which center amplitude level VC is 1.4 V to 1.7 V, the first comparator 21 of Fig. 3 outputs the comparison signal S1 at a low level, and the second comparator 22 outputs the comparison signal S2 at a high level. The first OR circuit 23 outputs the first selection signal SEL1 at a low level, and the second OR circuit 24 outputs the second selection signal SEL2 at a high level. Accordingly, the first receiving circuit 17 of Fig. 1 responds to the low first selection signal SEL1 and generates an output signal OUT having a predetermined level from the input signal IN1. The second receiving circuit 18 sets the output terminal at high impedance in response to the high second selection signal SEL2.

As shown in Fig. 2, the external device 13b is connected to the semiconductor device 11. When the input signal IN2 of which center amplitude level is 0.7 V to 1.0 V, the first and second comparators 21 and 22 of Fig. 3 outputs the comparison signals S1 and S2 at a low level. In this case, the first OR circuit 23 outputs the first selection signal SEL1 at a high level, and the second OR circuit 24 outputs the second selection signal SEL2 at a low level. Accordingly, the first receiving circuit 17 sets the output terminal at high impedance, and the second receiving circuit 18 generates an output signal OUT having a predetermined level from the input signal IN2.

In this manner, the semiconductor device 11 substantially selects the determination level of the input signal IN by selectively validating the first and second receiving circuits 17 and 18 in accordance with the center amplitude level VC of the input signal IN (IN1 and IN2). Accordingly, the first receiving circuit 17 and the second receiving circuit 18 function as selection circuits. This enables the receipt of the input signal IN at different center amplitude levels VC.

The features of the semiconductor device 11 according to the first embodiment of the present invention will now be discussed.
(1) The semiconductor device 11 includes the input circuit 15, which is configured by the first and second receiving circuits 17 and 18 and the detection circuit 19. The first and second receiving circuits 17 and 18 receive the signals IN1 and IN2, which have different center amplitude levels VC, and output the signal OUT at the same level. The detection circuit 19 detects the center amplitude level VC of the input signal IN and generates the selection signals SEL1 and SEL2 as control signals in response to the detected level. The selection signals SEL1 and SEL2 validate one of the receiving circuits 17 and 18. This enables the receipt of the input signals IN having different center amplitude levels VC without connecting the AC coupling circuit 53 (refer to Fig. 7) to the outside of the semiconductor device 11.
(2) The first and second receiving circuits 17 and 18 set the output terminals at high impedance when its receiving circuit is not valid in response to the selection signals SEL1 and SEL2. This surely transmits the output signal OUT of the valid receiving circuit to the internal circuit 16.
(3) In the detection circuit 19, the comparators 21 and 22 receive the reference voltages E1 and E2 corresponding to two different center amplitude levels VC and compares the reference voltages E1 and E2 with the input signal IN (IN1 and IN2). In this case, the selection signals SEL1 and SEL2 for selecting the first and second receiving circuits 17 and 18 are easily generated based on the comparison output of the comparators 21 and 22 and is practically preferable.
(4) The employment of the semiconductor device 11 results in the AC coupling circuit 53 becoming unnecessary. Thus, the number of components and the connection area in a personal computer or its peripheral devices are not increased.

A second embodiment according to the present invention will now be discussed with reference to Figs. 4 to 6.

Fig. 4 is a schematic block diagram of a data transfer system in the present embodiment. The semiconductor device 30 includes an input circuit 31 and an internal circuit 32. The input circuit 31 includes a receiving circuit (conversion circuit) 33 and a detection circuit 34. The semiconductor device 30 is also a serial bus controller that is in compliance with the P1394b standard. The semiconductor device 30 is connected to an external device 13c by a communication cable 12 to transfer data to and from the external device 13c. The external device 13c includes an output circuit 14c. In the same manner as the external device 13a (refer to Fig. 1), the external device 13c also outputs signals IN and /IN of which the center amplitude level VC has the first level (1.4V to 1.7V) based on the first power supply voltage V1 (2.5V). Further, the semiconductor device 30 is connected to a further external device that outputs a signal of which center amplitude level VC has a second level (0.7 V to 1.0 V) to transfer data to and from the external device.

Therefore, in the same manner as the semiconductor device 30 of the first embodiment, the semiconductor device 30 of the present embodiment receives the input signals IN and /IN of which center amplitude level is 1.4 V to 1.7 V or 0.7 V to 1.0 V.

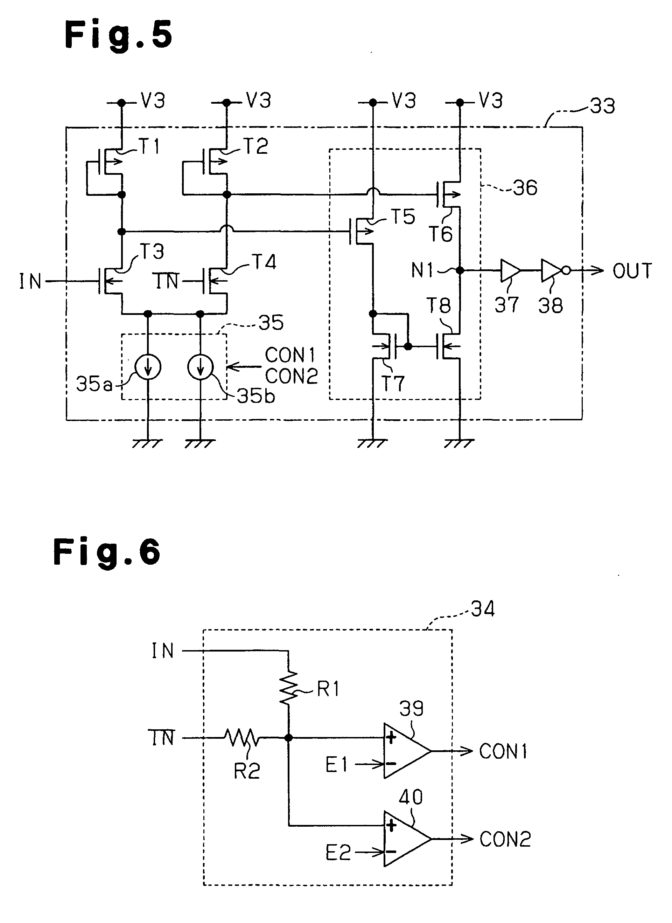

Fig. 5 is a circuit diagram of the receiving circuit 33 in the present embodiment. The receiving circuit 33 includes p-channel MOS transistors T1 and T2, n-channel MOS transistors T3 and T4, a current source 35, and a level converter 36. The current source 35 includes a first constant current source 35a and a second constant current source 35b.

The input signal IN of the external device 13 is input to the gate of the n-channel MOS transistor, and the input signal /IN is input to the gate of the n-channel MOS transistor T4. The input signals IN and /IN are differential signals and when one has a high level the other has a low level. The drain of the transistor T3 is connected to the transistor T1 via a power supply V3, and the drain of the transistor T4 is connected to the transistor T2 via the power supply V3. The source of the transistor T3 is connected to the source of the transistor T4. These sources are grounded via the current source 35. The gate of the transistor T1 is connected to the drain of the transistor T1, and the gate of the transistor T2 is connected to the drain of the transistor T2.

The level converter 36 is configured by the p-channel MOS transistors T5 and T6 and the n-channel MOS transistors T7 and T8. The gate of the transistor T5 is connected to the drain of the transistor T1, and the gate of the transistor T6 is connected to the drain of the transistor T2. The source of the transistor T5 is connected to the power source V3, and the drain of the transistor T6 is grounded via the transistor T8. The drain of the transistor T7 is connected to the gates of the transistors T7 and T8. The output signal OUT is output via a buffer 37 and an inverter circuit 38, which are series-connected to a node N1 between the transistor T6 and the transistor T8.

In the receiving circuit 33, the amount of current that flows through the transistors T3 and T4 is determined in accordance with the voltage level of the signals IN and /IN that are input to the transistors T3 and T4. The total of the amount of current that flows through the transistors T3 and T4 substantially matches the current amount driven in the current source 35. Based on the difference of the current amount flowing through the transistors T3 and T4, the level converter 36 converts the current to the voltage (low level or high level) required by the internal circuit 32. More specifically, when the input signals IN and /IN satisfy IN > /IN, the signal OUT is output at a high level. When IN < /IN is satisfied, the signal OUT is output at a low level. Further, in this state, when the center amplitude level VC is 1.4 V to 1.7 V, only the first constant current source 35a is driven in the current source 35 thus decreasing the current amount. When the center amplitude level VC of the input signals IN and /IN is 0.7 V to 1.0 V, the first constant current source 35a and the second constant current source 35b of the current source are both driven thus increasing the current amount. This changes the determination level (threshold value) of the input signals IN and /IN in the receiving circuit 33 and outputs the output signal OUT at a certain level that corresponds to the logic level (low level or high level) of the input signals IN and /IN. The switching of the current amount in the current source 35 is performed in accordance with control signals CON1 and CON2 that are output from the detection circuit 34.

Fig. 6 is a circuit diagram of the detection circuit 34. The detection circuit 34 is configured by first and second comparators 39 and 40 and first and second resistors R1 and R2, which have a resistance of 10 kΩ. The voltage value between the first resistor R1 and the second resistor R2 is set at the median voltage value of the input signals IN and /IN. The median voltage value is input to the non-inverting terminals of the comparators 39 and 40. Further, a reference voltage E1 is input to the inverting input terminal of the first comparator 39, and a reference voltage E2 is input to the inverting input terminal of the second comparator 40.

Accordingly, when the input signals IN and /IN of which the center amplitude level VC is at the first level (1.4 V to 1.7 V) are input to the semiconductor device 30, the first comparator 39 outputs the first control signal CON1 at the low level and the second comparator 40 outputs the second control signal CON2 at the high level. In response to the control signals CON1 and CON2, the receiving circuit 33 drives only the first constant current source 35a of the current source 35. When the input signals IN and /IN of which the center amplitude level VC is at the second level (0.7 V to 1.0 V) are input to the semiconductor device 30, the first comparator 39 outputs the first control signal CON1 at a low level, and the second comparator 40 outputs the second control signal CON2 at a low level. In response to the control signals CON1 and CON2, the receiving circuit 33 drives both of the first constant current source 35a and the second constant current source 35b.

The features of the semiconductor device 30 according to the second embodiment of the present invention will now be described.
(1) The semiconductor device 30 includes the input circuit 31, which is configured by the receiving circuit 33 and the detection circuit 34. The receiving circuit 33 includes the current source 35 and adjusts the current amount of the current source 35 in response to the control signals CON1 and CON2 from the detection circuit 34. The adjustment of the current amount changes the determination level of the input signal IN in the receiving circuit 33. The changing of the determination level enables the receiving of the input signals IN and /IN at different center amplitude levels VC and enables the output of the output signal OUT at a certain level in accordance with the level of the input signals IN and /IN. As a result, the input signals IN and /IN having different center amplitude levels VC are received with a single receiving circuit 33 even if the AC coupling circuit 53 (refer to Fig. 7) is not connected to the outside of the semiconductor device 30.
(2) The current source 35 is configured by the constant current sources 35a and 35b that correspond to two different center amplitude levels VC and changes the number of the constant current sources 35a and 35b that are to be driven in response to the control signals CON1 and CON of the detection circuit 34 to change the amount of current flowing through the transistors T3 and T4. This changes the determination level of the receiving circuit 33 to be changed in correspondence with the center amplitude level VC of the input signals IN and /IN.

Each of the above embodiments may be varied as described below.

In addition to the semiconductor devices (serial bus controllers) 11 and 30 that are in compliance with the P1394b standard, the present invention may be applied to other semiconductor devices.

In the input circuits 15 and 31 of the above embodiments, two signal determination levels are set in accordance with two input signals having different center amplitude levels VC. However, three or more signal determination levels may be set. In this case, an input circuit including receiving circuits, the number of which corresponds to that of the signal determination levels, and a constant current source are used.

## Claims

1. A semiconductor device for receiving input signals having different center amplitude levels, the semiconductor device being **characterized by**:
a detection circuit for detecting a center amplitude level of the input signals to generate a control signal; and
a conversion circuit connected to the detection circuit to convert the input signals to a signal having a certain level in accordance with the control signal.

2. The semiconductor device according to claim 1, being **characterized in that**:
the conversion circuit includes a plurality of receiving circuits for receiving a plurality of input signals having center amplitude levels that differ from one another and for generating an output signal having a common level; and
the detection circuit generates the control signal to validate one among the plurality of receiving circuits in accordance with the detected center amplitude level.

3. The semiconductor device according to claim 2, being **characterized in that** among the plurality of receiving circuits, a receiving circuit that is invalidated in response to the control signal sets its output terminal at high impedance.

4. The semiconductor device according to claim 1, being **characterized in that**:
the conversion circuit is a receiving circuit having a plurality of determination levels, and the receiving circuit changes the determination level based on the control signal to convert each of the input signals to a signal having a certain level in accordance with the determination level; and
the detection circuit generates the control signal so that each determination level of the receiving circuit corresponds to the center amplitude level of each of the input signals.

5. The semiconductor device according to claim 4, being **characterized in that**:
the receiving circuit includes a MOS transistor having a gate provided with the input signals, a current source connected to the MOS transistor, and a conversion circuit connected to the MOS transistor for converting current that flows through the MOS transistor to voltage; and
the current source changes current amount in response to the control signal of the detection circuit to change the determination level.

6. The semiconductor device according to claim 4, being **characterized in that**:
each of the input signals is a differential signal, the semiconductor device including a pair of MOS transistors having gates, each being provided with the differential signal, a current source connected to the pair of MOS transistors, and a conversion circuit connected to the pair of MOS transistors to convert current flowing through the pair of MOS transistors to voltage; and
the current source changes current amount in response to the control signal of the detection circuit to change the determination level.

7. The semiconductor device according to claim 5 or 6, being **characterized in that** the current source includes a plurality of constant current sources corresponding to the center amplitude level of the input signal and changes the number of the constant current sources that are driven in response to the control signal of the detection circuit to change the current amount.

8. The semiconductor device according to any one of claims 1 to 7, being **characterized in that** the detection circuit includes a plurality of comparators respectively corresponding to the plurality of center amplitude levels, and each of the comparators receives a reference potential corresponding to the associated center amplitude level and compares the reference voltage with voltage of the input signal, and the detection circuit generates the control signal based on comparison results of the plurality of comparators.

9. A semiconductor device for receiving an input signal having different center amplitude levels, the semiconductor device being **characterized by**:
a detection circuit for detecting a center amplitude level of the input signal to generate a control signal; and
a selection circuit connected to the detection circuit for selecting a determination level of the input signal in accordance with the control signal.

10. A data transfer system including:
a first device for outputting a data signal;
a second device for receiving the data signal as an input signal, the data transfer system being **characterized in that** the second device includes:
a detection circuit for detecting a center amplitude level of the input signal and generating a control signal; and
a conversion circuit connected to the detection circuit for converting the input signal to a signal having a certain level in accordance with the control signal.

11. A data transfer system including:
a first device for outputting a data signal;
a second device for receiving the data signal as an input signal, the data transfer system being **characterized by** the second device including:
a detection circuit for detecting a center amplitude level of the input signal and generating a control signal; and
a selection circuit connected to the detection circuit for selecting a determination level of the input signal in accordance with the control signal.
